# NEW EUROPEAN PATENT SPECIFICATION

(11) **EP 0 643 910 B2**
(45) Date of publication and mention of the opposition decision: **24.09.2003**
(45) Mention of the grant of the patent: 26.03.1997
(21) Application number: 94203054.5
(22) Date of filing: 17.09.1991
(51) Int. Cl.: A01K 13/00, A01K 1/12, A01J 5/00

(54) **A cleaning apparatus**
Reinigungsvorrichtung
Dispositif de nettoyage

(30) Priority: 18.09.1990 NL 9002047
(43) Date of publication of application: 22.03.1995
(62) Divisional of application: 91202364.5
(73) Proprietor: MAASLAND N.V., 3155 PD Maasland (NL)
(72) Inventor: van der Lely, Edwin, NL-3155 PD Maasland (NL); van den Berg, Karel, NL-2971 BR Bleskensgraaf (NL); Fransen, René, NL-3135 ZD Vlaardingen (NL)
(74) Representative: Corten, Maurice Jean F.M.

(56) References cited:
- EP-A- 0 323 444
- EP-A- 0 349 019
- NL-A- 8 702 285

## Description

The present invention relates to an implement according to the preamble of claim 1.

Such an implement is known from EP-A-0323444.

In the said implement the teat cups and the cleaning member are fixed to a hinge pin which is mounted on the robot arm. In order to milk the animal or clean the teats, the teat cups and the cleaning member are able to rotate through 180° around the hinge pin. The use of a robot arm on which the cleaning member and the teat cups are permanently fixed, has the drawback that during milking of the animal the cleaning member remains fixed to the robot arm and thus forms an obstacle which occupies space.

The present invention aims at providing an implement such as is described in the opening paragraph, which obviates the drawbacks mentioned or at least limits them to a considerable extent.

For this purpose the implement as meant in the opening paragraph, in accordance with the invention, is characterized by the features of the characterizing part of claim 1. With the aid of a robot arm according to the invention it is possible to take both the cleaning member and the teat cups under the animal to be milked, while, when the teats are cleaned, the cleaning member can be uncoupled from the robot arm so that the cleaning member forms no obstacle for the robot arm when the teat cups are applied to the teats of the animal to be milked.

According to a feature of the invention, hereto the support can be provided with projections, preferably teat-shaped projections, which by applying a vacuum to the teat cups are drawn into the teat cups, so enabling the support to be secured by suction in a fixed position in relation to the teat cup duster.

According to another aspect of the invention, the cleaning member is provided with cleaning tools and there are provided cleaning means for decontaminating the cleaning tools. Before the teats of another animal are cleaned with the cleaning tools, it is thus possible to decontaminate the cleaning tools, so minimizing the risk of cross infections.

According to an aspect of the invention, the cleaning tool/tools and/or cleaning member are able to be taken to a cleaning plant by the robot arm which is used for attaching the teat cups or by a separate robot arm.

According to a feature of the invention, the cleaning plant comprises a container in which a cleaning or rinsing liquid can be provided. A second container is arranged in the first container and, according to a further feature of the invention, is provided with perforations. According to a further feature, the second container is rotatable with respect to the outer container. In the container there is/are provided one or a plurality of brushes, by means of which, according to a further aspect of the invention, the cleaning tools are brushed down. In an advantageous embodiment of the invention, in the container there is a sensor for monitoring the quality of the cleaning or rinsing liquid. According to a further feature of the invention, the sensor performs luminous intensity measurements.

According to a further aspect of the invention, the cleaning tools are fully or partly constituted by or have a surface constituted by a moisture-absorbing material having a texture or being made from a woven product or from a sponge-like material or constituted by a fully or partly closed cell structure, such as rubber or plastic-like material, said cleaning tools operating with a rubbing motion.

The cleaning tools, according to another feature of the invention, have a portion with an empty space. According to the invention, the apparatus can be provided with the feature that a liquid, such as a cleaning or disinfecting liquid, can be fed into the empty space, thereby enabling the surface of the cleaning tools to be moistened with it.

According to a feature of the invention, the cleaning tools may be of an elastic material, such as rubber or plastic, assuming its operative shape at a certain pneumatic or hydraulic pressure.

According to the invention, the apparatus can have the feature that the cleaning tools or the cleaning member is/are capable of being coupled or uncoupled by means of a quick-action attachment, such as a bayonet joint.

In a particular embodiment according to the invention, the cleaning member is provided with protective means. According to a further feature of the invention, these protective means comprise a contact strip which extends fully or partly along the cleaning tools. According to another aspect of the invention, the contact strip enables a signal to pass when it is in contact with the dairy animal, causing the robot arm to move in a direction away from the point of contact. According to another feature of the invention, the protective means comprise a sensor or contact member provided on the top side of the shaft directed upward. The contact member is a switch or distance sensor which causes, according to a further aspect of the invention, the rotary motion of the cleaning tool to stop and/or brings about a movement of the robot arm in a direction away from the point of contact.

In explanation of the invention, a few embodiments of the apparatus according to the invention will now be described with reference to the accompanying drawings, in which:
Figure 1 shows a top view of the apparatus for cleaning the teats of a dairy animal's udder;
Figure 2 shows a side view of the apparatus depicted in Figure 1;
Figure 3 is a top view of a first embodiment of the cleaning member as used in the apparatus depicted in Figure 1;
Figure 4 shows a partial cut-away side view according to line IV-IV in Figure 3;
Figure 5 shows a side view along the arrow V in Figure 3;
Figure 6 shows a side view of a second embodiment of a cleaning member;
Figure 7 is a top view of the paths described by the cleaning tools of the cleaning member accoding to Figure 6;
Figure 8 is a side view of a third embodiment of a cleaning member.

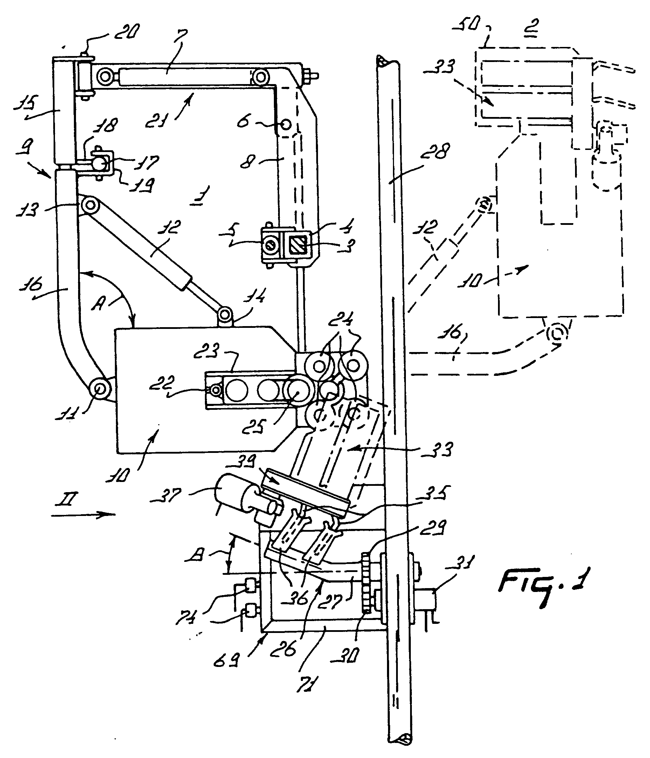

The apparatus depicted in Figure 1 has a robot arm 1 which, in the position marked by continuous lines, is in a condition of rest, and, in the position marked by dashed lines, is in operating condition. Figure 1 shows only the side portion of a cleaning/milking parlour. To the right and to the left, this cleaning/milking parlour is extended with common frame parts, gates for opening and closing to enable an animal, such as a cow, to enter and to leave the parlour, a feeder etc., the said parts having no direct connection with the invention.

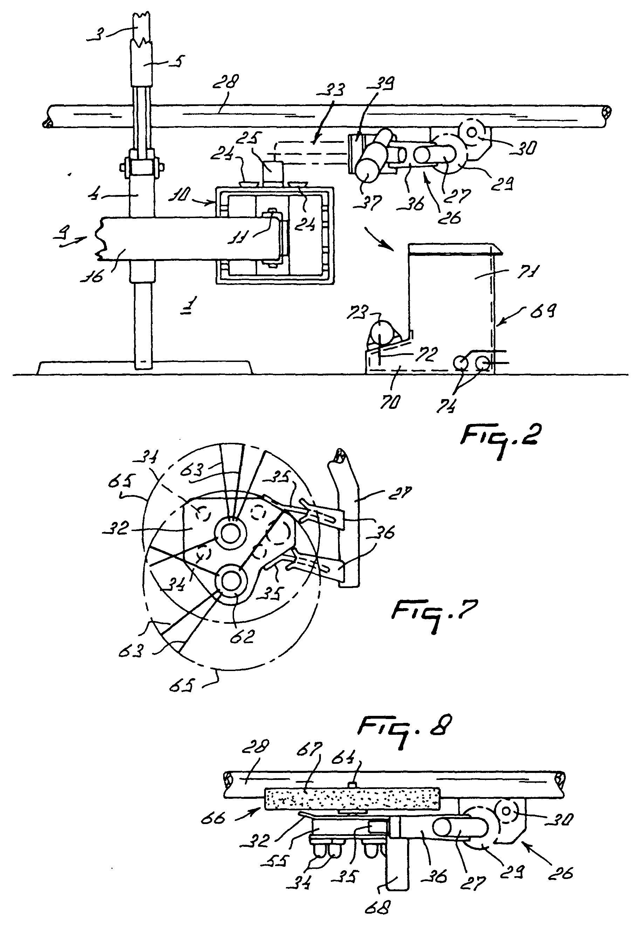

When an animal has taken its place on the milking/cleaning parlour 2, a milking/cleaning apparatus can be applied to the teats of the dairy animal's udder by swivelling robot arm 1. As will appear from the following, the robot arm 1 depicted in Figures 1 and 2 is suitable for taking both the cleaning apparatus and the teat cups under the animal to be milked. It stands to reason that separate robot arms can also be used for cleaning the teats and for attaching the teat cups.

A robot arm 1 for attaching the teat cups has been described extensively in European Patent Application 0300582. The robot arm 1 is connected slidably in height with a frame beam 3 by means of a sliding sleeve 4 which is mounted slidably on the frame beam 3. Sliding the slidable sleeve 4 in upward direction is effected by means of a cylinder 5, one end of which is connected with the frame beam 3 and the other end with the sliding sleeve 4. Furthermore, the robot arm 1 can be swivelled about a substantially vertical hinge pin 6. The robot arm is swivelled about the vertical hinge pin 6 by means of a cylinder 7, one end of which is (rotatably) attached to a support 8 welded onto the frame beam 3 and the other end (rotatably) attached to a first portion 9 of the robot arm 1. It will be obvious that the robot arm 1 can be swivelled from the position of rest to the operating position, and vice versa, by operating the cylinder 7.

A second portion 10 is pivotably mounted on a hinge pin 11 on the first portion 9 of the robot arm 1. The second portion 10 of the robot arm 1 can be swivelled about the hinge pin 11 by means of a cylinder 12 whose one end is secured to a support 13 of the first portion 9 of the robot arm 1 and whose other end is secured to a support 14 of the second portion 10 of the robot arm 1. The second portion 10 of the robot arm 1 can be swivelled about the hinge pin 11 into a desired angle A by means of the cylinder 12.

The first portion 9 of the robot arm 1 comprises a portion 15 and a portion 16 which can turn in relation to one another as is indicated by the arrows in Figure 1. The two portions 15,16 can be turned in relation to one another by means of a cylinder 17. One end of the cylinder 17 is connected with a support 18 mounted to the portion 15 and the other end is connected with a support 19 mounted on the portion 16. The second portion 10 of the robot arm 1 can be put at an angle to a horizontal plane by means of the cylinder 17.

The first portion 9 of the robot arm 1 is also provided with a hinge 20 connecting a portion 21 with the portion 15. The hinge 20 is meant for protection of the robot arm 1. In the unlikely event of the animal treading on the second portion of the robot arm 1, the two portions 15 and 21 will pin-pivot in relation to one another against the action of springs, thus limiting the risk of the robot arm 1 being damaged to a considerable extent.

Mounted on the second portion 10 of the robot arm 1 (see Figure 1) is a slide 22 which can be moved along a rail 23 through the activation of a (non-shown) control cylinder. On the slide 22 there are provided teat cups 24 as well as (non-shown) attachment means suitable for attaching the teat cups 24 to the teats.

Furthermore, a sensor 25 capable of detecting the animal's teats is provided on the slide 22. The signal produced by the sensor 25 is processed by a computer to generate a signal serving the operation of the control cylinders of the robot arm 1. This enables the end of the robot arm to follow continuously the relevant teats when the animal changes (to some extent) its position.

Besides a first robot arm 1, a second robot arm 26 is provided. The second robot arm 26 comprises a shaft 27, of which one end is suspended in a bearing on the frame 28 and which shaft is provided with a gear wheel 29 meshing with a second gear wheel 30 fitted on the shaft of an electric motor 31 attached next to the bearing of the second robot arm 26 to the frame 28. A removable support 32 is attached to the free end of the second robot arm 26 which cranked through angle B and has a cleaning member 33 disposed on it.

The bottom side of the support 32 is provided with a teat-shaped projection 34, by means of which it is possible to place the support 32 on the first robot arm 1. To this end, the first robot arm 1 with the teat cups 24 have to be taken to a position under the teat-shaped projections 34 of the support 32. By applying a vacuum to the teat cups 24, the teat-shaped projections 34 are drawn into, and secured to, the teat cups 24 by suction, enabling the support 32, one end of which is provided with spring-steel strips 35 in holders 36, to be detached from the second robot arm 26. An electric motor 37 attached to the support 32 is for driving the cleaning member 33. The control of the electric motor 37 proceeds through a flexible electrical cable 38.

An alternative is to realise the control of the electric motor 37 through contact strips which are located on the bottom side of the support 32, which contact strips make contact with contact strips located on the first robot arm 1 or the second robot arm 26, as the case may be, after the support 32 has been secured by suction.

Before the teat cups 24 are connected to the animal to be milked, the animal's teats should be cleaned. By means of an identification system to identify a given animal and the sensor 25 which is located on the first robot arm 1 and which is capable of detecting the positions of the teats, the first robot arm is put into an appropriate position under computer control. All this being known to the art and being no part of the present invention, further details will not be described hereinafter.

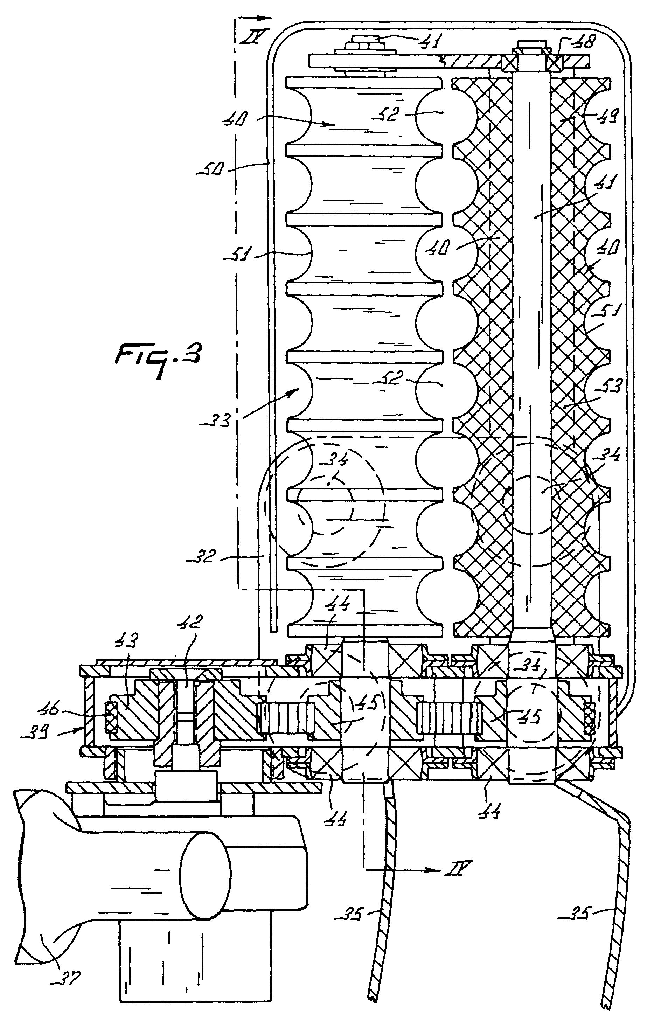

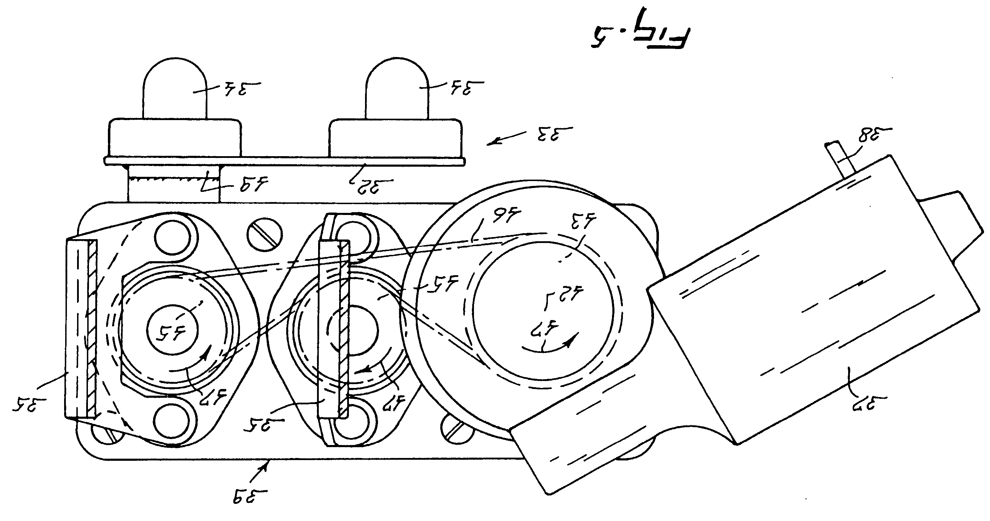

Figure 3 shows a top view of the cleaning member 33. The cleaning member 33 comprises a housing 39 accommodating cleaning tools 40 with shafts 41 and having the electric motor 37 attached. The electric motor 37 is to drive a shaft 42 on which a gear wheel 43 is mounted, with the gear wheel 43 being located within the housing 39. The shafts 41 are supported in bearings 44 fitted on the housing. Situated within the housing 39, gear wheels 45 are mounted at the end of the cleaning tools 40. A timing belt 46 connects the gear wheels 45 of the cleaning tools 40 to the gear wheel 43 of the electric motor 37. From Figure 5 it can be seen that the timing belt 46 is routed round the outer two gear wheels 43, 45 and is underneath the middle gear wheel 45. The situation of the timing belt 44 on the gear wheels 43, 45 results in a direction of rotation of the cleaning tools 40 as is indicated by the arrows 47 in Figure 5. A teat coming from above into the space between the cleaning tools 40 is drawn downward in between the cleaning tools owing to this direction of rotation. Thus a "locating" action of the cleaning tools 40 is obtained. The rotational speed of the cleaning tools 40 is adjustable, with its value being roughly between 70 and 120 RPM.

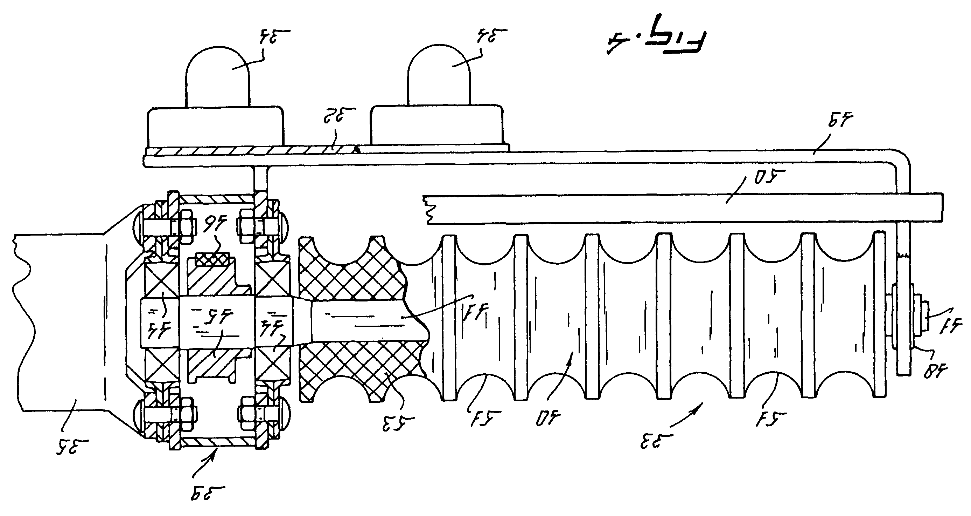

Figure 4 shows that the shafts 41 of the cleaning tools 40 have the other ends supported in bearings 48 fitted in brackets 49 extending underneath the cleaning tools 40. The brackets 49 prevent the shafts 41 of the cleaning tools 40 from flexing too far.

A contact strip 50 encircling the cleaning member 33 and, like all other controllable elements of the apparatus, being connected to the computer ensures that the cleaning member 33 will not be damaged when it comes into contact with the animal. To achieve this, the computer sends the robot arm 1 in a direction away from the point of contact.

Mounted on each of the shafts 41 is a flexible cleaning tool 49 having a closed cell structure and having a profile 51 on the outer side. The profile 51 is ridged in shape and it has such dimensions that the two cleaning tools 40 disposed parallel and side by side enclose a space 52 formed by their profiles 51, into which a teat can be drawn. The surface of the cleaning tools 40 is that of a textured, moisture absorbing layer 53. The layer 53 is constituted by a replaceable sleeve pushed onto cleaning tool 40, as is indicated by the hatching in Figure 3. When the sleeve is worn and/or not cleanable any more, it should be renewed.

A further alternative is to replace the whole cleaning tools 40 when they are soiled or worn. This is achieved e.g. by securing the shaft 41 in the housing 39 by means of a quick-action attachment, such as a bayonet joint.

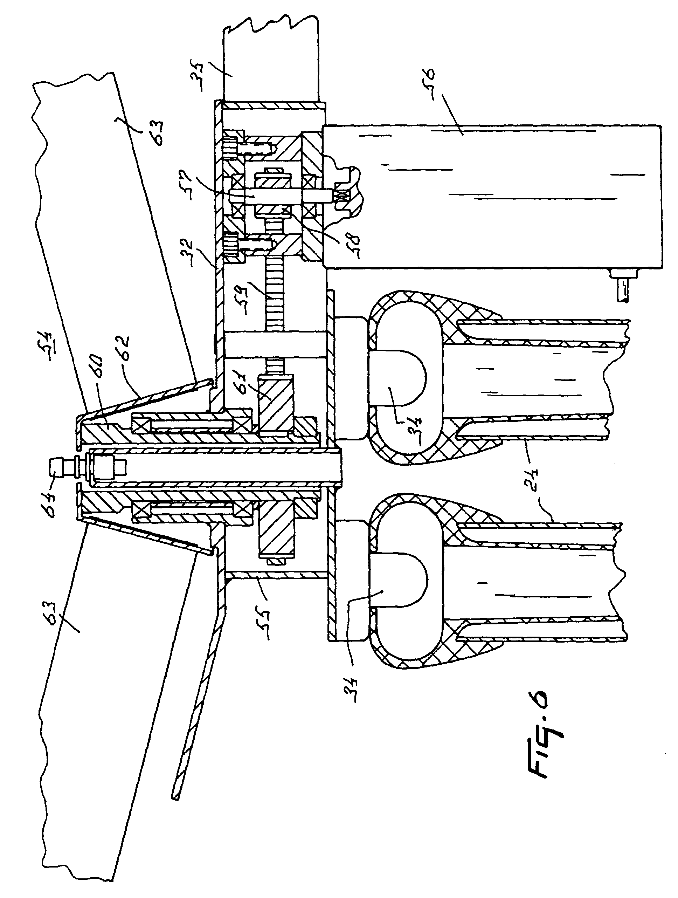

Figure 6 shows a different embodiment of the deaning member; this cleaning member 54 is mounted on the support 32 in a similar way as is the cleaning member 33 mentioned before. The cleaning member 54 is atached by suction to the teat cups 24 by means of the teat-shaped projections 34 of the support 32. On the support 32 there is provided a housing 55, to whose bottom side an electric motor 56 is attached. The electric motor 56 is to drive a shaft 57 located in the housing 55 where it is supported in bearings. The shaft 57 is provided with a gear wheel 58, by means of which a timing belt 59 is driven. The deaning member 54 has a shaft 60 supported in bearings in the housing 55 and its lower end is provided with a gear 61 carrying the timing belt 59 driven by the gear wheel 58 of the electric motor 56. At the other end of the shaft 60 there is provided a conical cap 62, to which strip-shaped pieces of doth (cleaning tools) 63 are attached. The length of the pieces of doth 63 measured with respect to the centre of the shaft 60 is about 240 mms. The rotary speed of the shaft 60 is about 450 RPM. At said rotary speed, the cleaning tools 63 assume an attitude which is upwardly sloping in radial direction under the influence of the centrifugal force exerted. In the vicinity of the top of the conical cap 62 there is provided a switch 62 which causes the rotation of the shaft 60 to stop when the switch 64 is operated by touching the animal. Thus, it is obviated that injuries are inflicted on the animal when the rotating cone 62 is pressed against her.

The robot arm 1 puts the rotating pieces of doth 63, which have been moistened to a certain extent, into such a position that they strike the teats and, owing to their flexibility, surround same. Alternatively, it is also possible to dispose two such deaning members 54 side by side. In Figure 7 the two rotary paths 65 of the cleaning tools 63 are indicated by dashed lines. The cleaning members 54 are disposed such that the axes of rotation of the shafts 60 are inclined with respect to the support 32. Consequently, the two rotary paths 65 of the rotary cleaning tools 63 are parallel to each other. This makes it feasible to clean fore and hind teats at the same time.

Figure 8 shows an other cleaning member 66. It is a sponge 67 which is provided on the support 32 and is capable of being set in motion by an electric motor 68. By pressing the sponge against the teats, the teats are rubbed clean. When rubbing, the sponge 67 moves in a plane parallel to the support 32. The path followed by the sponge 67 doing so can be in the shape of a circle or ellipse or any other pattern.

After the cleaning of the teats, the cleaning member 33, 54, 66 can be removed from the space under the animal by means of the robot arm 1. Then, the support 32 with the spring steel strips 35 is re-inserted into the holders 36. Subsequently, the vacuum of the teat cups 24 is released and the first robot arm 1 is disconnected from the support 32. Before cleaning another animal, it is possible to wash the cleaning member 33, 54, 66. Hereto, the electric motor 37, 56, 68 of the second robot arm 26 is energized, so that shaft 27 rotates through a certain angle. The cleaning member 33, 54, 66 is thus taken to a washing machine 69, In Figure 2, the washing machine 69 comprises a first container 70 and, disposed herein, a rotatable second container 71 provided with perforations. The first container 76 is capable of being filled with a cleaning or rinsing liquid by means of a pump 73 using a line 72 connected to the first container 76. The perforated container 72 ensures that the cleaning or rinsing liquid is agitated appropriately. To prevent liquid from dripping from the cleaning tools 40, 63, 67 during the cleaning of the teats, the cleaning tools 40, 63, 67 are removed from the liquid and rotated at a high speed for some time. This causes the excess liquid to drop back into the first container 70.

After a given time, the electronic motor 31 can be energized again, causing the second robot arm 26 to return to its original position.

In the washing machine 69 there is provided a liquid-quality monitoring sensor 74 which tests the quality of the remaining cleaning or rinsing liquid. For instance, this is a luminous-intensity sensor. When it is detected that the liquid quality is insufficient, the dirtied liquid can be drained off by activation of the pump 73 and fresh cleaning or rinsing liquid be pumped into the container 70. To achieve better cleaning results, the cleaning or rinsing liquid can be preheated. This can be realised by means of a heater coil or a (small-size) domestic heater.

## Claims

1. An implement for automatically milking animals, comprising a milking robot equipped with a robot arm (1) able to carry teat cups (24), the implement further comprising a cleaning member (33, 54, 66) for cleaning the teats of the animal, **characterized in that** the cleaning member (33, 54, 66) is capable of being motor-driven, is provided with at least one cleaning tool (40, 63, 67) and is provided on or near the extremity of a support (32) to be placed under the dairy animal, said support (32) being suitable for being placed on or near the end of the robot arm (1) and being able to be coupled to or uncoupled from the robot arm (1) automatically by means of the teat cups (24) and vacuum therein.

2. An implement as claimed in claim 1, **charac-terized in that** the support (32) is provided with teat-shaped projections (34).

3. An implement as claimed in any one of the claims 1, 2, **characterized in that** the support (32) can be attached to a second robot arm (26).

4. An implement as claimed in any one of the preceding claims, **characterized in that** the cleaning member (33, 54, 66) is provided with deaning tools (40, 63,67) and there are provided cleaning means (69) for decontaminating the cleaning tools (40, 63, 67).

5. An implement as claimed in claim 4, **characterized in that** the cleaning tool/tools (40, 63, 67) and/or cleaning member (33, 54, 66) are able to be taken to a cleaning plant by the robot arm (1) which is used for attaching the teat cups (24), or by the second robot arm (26).

6. An implement as claimed in any one of the preceding claims, **characterized in that** the cleaning tools (33, 54, 66) are fully or partly constituted by or have a surface constituted by a moisture-absorbing material having a texture or being made from a woven product or from a sponge-like material or constituted by a fully or partly closed cell structure, such as rubber or plastic-like material, said cleaning tools operating with a rubbing motion.

## Patentansprüche

1. Vorrichtung zum automatischen Melken von Tieren, die einen Melkroboter mit einem Roboterarm (1) zum Tragen von Zitzenbechern (24) sowie ferner eine Reinigungsvorrichtung (33, 54, 66) zum Reinigen der Zitzen des Tieres aufweist,
**dadurch gekennzeichnet, daß** die Reinigungsvorrichtung (33, 54, 66) durch einen Motor anzutreiben ist, mit mindestens einem Reinigungswerkzeug <40, 63, 67) versehen ist und an oder nahe dem Ende eines Trägers (32) angeordnet ist, der unter das milchgebende Tier zu bewegen ist, wobei der Träger (32) an oder nahe dem Ende des Roboterarmes (1) anzuordnen ist und mit Hilfe der Zitzenbecher (24) und des darin herrschenden Vakuums automatisch an den Roboterarm (1) anzuschließen und von ihm zu lösen ist.

2. Vorrichtung nach Anspruch 1,
**dadurch gekennzeichnet, daß** der Träger (32) zitzenförmige Vorsprünge (34) aufweist.

3. Vorrichtung nach einem der Ansprüche 1 oder 2,
**dadurch gekennzeichnet, daß** der Träger (32) an einem zweiten Roboterarm (26) anzubringen ist.

4. Vorrichtung nach einem der vorhergehenden Ansprüche,
**dadurch gekennzeichnet, daß** die Reinigungsvorrichtung (33, 54, 66) Reinigungswerkzeuge (40, 63, 67) aufweist, und daß zum Dekontaminieren der Reinigungswerkzeuge (40, 63, 67) eine Reinigungsvorrichtung (69) vorgesehen ist.

5. Vorrichtung nach Anspruch 4,
**dadurch gekennzeichnet, daß** das/die Reinigungswerkzeuge (40, 63, 67) und/oder die Reinigungsvorrichtung (33, 54, 66) von dem zum Anschließen der Zitzenbechern (24) dienenden Roboterarm (1) oder von dem zweiten Roboterarm (26) zu einer Reinigungsanlage zu befördern sind.

6. Vorrichtung nach einem der vorhergehenden Ansprüche,
**dadurch gekennzeichnet, daß** die Reinigungswerkzeuge (40, 63, 67) ganz oder teilweise aus feuchtigkeitsabsorbierendem Material bestehen oder eine Oberfläche haben, die aus einem solchen Material besteht, das ein Fasergefüge aufweist oder aus einem gewebten Produkt oder einem schwammartigen Material oder einem Material mit ganz oder teilweise geschlossener Zellstruktur besteht, wie z. B. Gummi oder kunststoffartigem Material, wobei die Reinigungswerkzeuge eine wischende Bewegung ausführen.

## Revendications

1. Dispositif pour traire automatiquement des animaux, comprenant un robot trayeur équipé d'un bras de robot (1) apte à porter des godets de trayons (24), le dispositif comprenant en outre un organe nettoyeur (33, 54, 66) pour nettoyer les trayons de l'animal,
**caractérisé en ce que** l'organe nettoyeur (33,54,66) est capable d'être entraîné par un moteur, est pourvu d'au moins un outil de nettoyage, et est prévu sur l'extrémité d'un support (32) destiné à être placé sous l'animal laitier, ou près de ladite extrémité, ledit support (32) pouvant être placé sur l'extrémité du bras de robot (1) ou près de celle-ci et pouvant être découplé ou désaccouplé du bras de robot (1), automatiquement au moyen des godets de trayons (24) dans lesquels il y a le vide.

2. Dispositif selon la revendication 1, **caractérisé en ce que** le support (32) est muni d'éléments saillants (34) en forme de trayons.

3. Dispositif selon l'une quelconque des revendications 1 et 2, **caractérisé en ce que** le support (32) peut être attaché à un deuxième bras de robot (26).

4. Dispositif selon l'une quelconque des revendications précédentes, **caractérisé en ce que** l'organe nettoyeur (33, 54, 66) est pourvu d'outils nettoyeurs (40, 63, 67) et **en ce que** sont prévus des moyens de nettoyage (69) pour décontaminer les outils nettoyeurs (40, 63, 67).

5. Dispositif selon la revendication 4, **caractérisé en ce que** le ou les outils nettoyeurs (40, 63, 67) et/ou l'organe nettoyeur (33, 54, 66) sont aptes à être entraînés jusqu'à un poste de nettoyage par le bras de robot (1) qui est utilisé pour attacher les godets de trayons (24), ou bien par le deuxième bras de robot (26).

6. Dispositif selon l'une quelconque des revendications précédentes, **caractérisé en ce que** les outils nettoyeurs (33, 54, 66) sont entièrement ou partiellement constitués par une surface formée d'une matière absorbant l'humidité, ayant une texture ou étant faite d'un produit tissé ou d'une matière spongieuse ou constituée par une structure en cellules entièrement ou partiellement fermées, telle que du caoutchouc ou une matière plastique, ou **en ce que** lesdits outils nettoyeurs ont une telle surface, lesdits outils agissant par un mouvement de frottement.
